# EUROPEAN PATENT APPLICATION

(11) **EP 4 832 359 A1**
(43) Date of publication of application: **28.10.2026**
(21) Application number: 24920250.8
(22) Date of filing: 11.09.2024
(51) Int. Cl.: H04B 1/10, H04B 7/185, H04W 16/02, H04W 72/0446, H04W 84/06

(54) **MOBILE COMMUNICATION SYSTEM**

(30) Priority: 23.01.2024 JP 2024008108
(71) Applicant: SoftBank Corp., Minato-ku Tokyo 1057529 (JP)
(72) Inventor: FUJII Teruya, Tokyo 105-7529 (JP); FUJII Takafumi, Tokyo 105-7529 (JP)
(74) Representative: SSM Sandmair
(86) International application number: PCT/JP2024/032541
(87) International publication number: WO 2025/158702

(57) **Abstract**

In a mobile communication system comprising a upper-airspace-relaying type base station having an antenna mounted on an upper-airspace flying body, etc. (including a UAV, a HAPS, and a communication satellite) and a terrestrial base station, an interference in uplink and downlink of a service link of each of the base stations is reduced, while improving a frequency utilization efficiency and preventing a decrease in communication capacity of a terminal. Each of the upper-airspace-relaying type base station and the terrestrial base station performs a radio communication of service link with a terminal by a TDD (Time Division Duplex) method using the same frequency. The transmission timing and the reception timing of the radio communication of the TDD method in the service link are reversed to each other between the upper-airspace-relaying type base station and the terrestrial base station. The terrestrial base station suppresses an interference signal from the upper-airspace-relaying type base station which is included in an uplink reception signal. The upper-airspace-relaying type base station suppresses an interference signal from the terrestrial base station which is included in an uplink reception signal.

## Description

### TECHNICAL FIELD

The present invention relates to a mobile communication system including a base station capable of performing a radio communication with a terminal.

### BACKGROUND ART

There is conventionally known a UAV that flies at altitudes of 18 km or less and a HAPS that flies in the stratosphere at altitudes of 18 km or more as a flying body or a floating body located in an upper airspace. There is also known a mobile communication system that is provided with a upper-airspace-relaying type base station as a first base station that performs a radio communication with a terminal via a service link antenna of a relay communication station disposed in a flying body or a floating body such as a UAV or HAPS (flying body), etc. located in an upper airspace, and a terrestrial base station as a second base station that performs a radio communication with the terminal via an antenna disposed on land or at sea, and that shares the same frequency in a service link between the upper-airspace-relaying type base station and the terrestrial base station, enabling a radio communication between terminals of common specifications.

As a technology that can be applied to reduce an interference between the upper-airspace-relaying type base station and the terrestrial base station in the mobile communication system, there is an interference control technology that adjusts and controls radio frames in the time domain (subframe units) on the premise that the upper-airspace-relaying type base station and the terrestrial base station are time-synchronized with each other (see, for example, Patent Literature 1 and Non-Patent Literature 1). This interference control technology is a technology that complies with the LTE (Long Term Evolution)-Advanced standard, and is also called eICIC (enhanced Inter-Cell Interference Coordination).

### CITATION LIST

### PATENT LITERATURE

Patent Literature 1: Japanese Unexamined Patent Application Publication No. 2012-129793.

### NON-PATENT LITERATURE

Non-Patent Literature 1: "Overview of 3GPP", Release 10, V0.2.1 (2014-06).

### SUMMARY OF INVENTION

### TECHNICAL PROBLEM

When the above-mentioned conventional interference control technology is applied, the upper-airspace-relaying type base station and the terrestrial base station use the frequencies allocated to the service link in a time-division manner, so the radio signals used by the upper-airspace-relaying type base station and the terrestrial base station are orthogonal on the time axis and no mutual interference occurs. However, due to the time-division-use of frequencies, neither the upper airspace-relaying type base station nor the terrestrial base station can use all of the frequencies allocated to the service link, which reduces the communication capacity (maximum transmission rate, peak throughput) of the terminals on each service link.

### SOLUTION TO PROBLEM

A mobile communication system according to an aspect disclosed in the present description is a mobile communication system comprising a upper-airspace-relaying type base station that performs a radio communication with a terminal via a service link antenna of a relay communication station provided in a flying body or floating body located in an upper airspace and a terrestrial base station disposed on land or at sea, and the upper-airspace-relaying type base station and the terrestrial base station are time-synchronized with each other. Each of the upper-airspace-relaying type base station and the terrestrial base station performs a radio communication of a service link with a terminal by a TDD (Time Division Duplex) method using a same frequency. Transmission timing and reception timing of the radio communication of the TDD method in the service link are reversed between the upper-airspace-relaying type base station and the terrestrial base station.

The terrestrial base station branches a transmission signal of a downlink transmitted from the terrestrial base station and transfers the transmission signal to the upper-airspace-relaying type base station as a transmission replica signal. The terrestrial base station performs a correlation processing between an uplink reception signal of the terrestrial base station, which includes an interference signal from the upper-airspace-relaying type base station that interferes with an uplink of the terrestrial base station, and a transmission replica signal transferred from the upper-airspace-relaying type base station, and estimates a complex reception amplitude of the interference signal from the upper-airspace-relaying type base station, generates an interference suppression signal that suppresses the interference signal from the upper-airspace-relaying type base station, by using an estimation result of the complex reception amplitude of the interference signal from the upper-airspace-relaying type base station and the transmission replica signal, and suppresses the interference signal from the upper-airspace-relaying type base station, which is included in the uplink reception signal of the terrestrial base station, by combining the uplink reception signal of the terrestrial base station with the interference suppression signal.

The base station of upper-airspace relying type branches a transmission signal of downlink transmitted from the upper-airspace-relaying type base station and transfers the transmission signal to the terrestrial base station as a transmission replica signal. The base station of upper-airspace relying type performs a correlation processing between an uplink reception signal of the upper-airspace-relaying type base station, which includes the interference signal from the terrestrial base station that interferes with an uplink of the upper-airspace-relaying type base station, and the transmission replica signal transferred from the terrestrial base station, and estimates a complex reception amplitude of the interference signal from the terrestrial base station, generates an interference suppression signal for suppressing the interference signal from the terrestrial base station, by using the estimation result of the complex reception amplitude of the interference signal from the terrestrial base station and the transmission replica signal, and suppresses the interference signal from the terrestrial base station, which is included in the uplink reception signal of the upper-airspace-relaying type base station, by combining the uplink reception signal of the upper-airspace-relaying type base station with the interference suppression signal.

In the foregoing mobile communication system, the upper-airspace-relaying type base station and the terrestrial base station may adjust their transmission timings so that the transmissions are reversed to each other by using time information obtained by a GNSS (Global Navigation Satellite System) receiver.

In the foregoing mobile communication system, the relay communication station mounted on the flying body or the floating body may be configured with a repeater relay apparatus (frequency-conversion repeater relay apparatus) that relays transmission and reception signals without regenerating them.

In the foregoing mobile communication system, the relay communication station mounted on the flying body or the floating body may be configured with a base station apparatus that regenerates transmission and reception signals, remodulates the regenerated signals, and relays the remodulated signals.

In the foregoing mobile communication system, the mobile communication system may further comprise an inter-base station cooperative control apparatus that performs a control between the upper-airspace-relaying type base station and the terrestrial base station, and the inter-base station cooperative control apparatus may transfer the transmission replica signal from the terrestrial base station to the upper-airspace-relaying type base station, and transfer the transmission replica signal from the upper-airspace-relaying type base station to the terrestrial base station.

In the foregoing mobile communication system, the mobile communication system may comprise a centralized-base station configuration section in which the terrestrial base station and the upper-airspace-relaying type base station are disposed in a same location or respectively configured in a same apparatus, and the centralized-base station configuration section may perform an estimation of the complex reception amplitude of the interference signal from the upper-airspace-relaying type base station, a generation of the interference suppression signal and a suppression of the interference signal from the upper-airspace-relaying type base station, in the terrestrial base station, and an estimation of the complex reception amplitude of the interference signal from the terrestrial base station, a generation of the interference suppression signal and a suppression of the interference signal from the terrestrial base station, in the upper-airspace-relaying type base station.

In the foregoing mobile communication system, the mobile communication system may further comprise an inter-base station cooperative control apparatus that performs a control between the upper-airspace-relaying type base station and the terrestrial base station, and the inter-base station cooperative control apparatus may adjust the transmission timing so that the transmission and the reception are reversed to each other between respective base stations, by using time information of GNSS (Global Navigation Satellite System) that is received by the upper-airspace-relaying type base station and received via a gateway apparatus and, time information of GNSS (Global Navigation Satellite System) received by the terrestrial base station.

In the foregoing mobile communication system, the flying body or the floating body may be a communication satellite, a UAV (Unmanned Aerial Vehicle) that flies at an altitude of 18 km or less, or a HAPS that flies in the stratosphere at an altitude of 18 km or more.

According to the mobile communication system disclosed in the present description, it is possible to reduce the interference caused by the transmission signal of downlink from a service link antenna of the relay communication station (an antenna of the upper-airspace-relaying type base station) provided in the flying body or the floating body located in the upper airspace, to the uplink reception signal of a service link antenna of the terrestrial base station (an antenna of the terrestrial base station), and it is possible to reduce the interference caused by the transmission signal of downlink from the terrestrial-base station antenna, to the uplink reception signal of the antenna of the upper-airspace-relaying type base station.

### BRIEF DESCRIPTION OF DRAWINGS

[FIG. 1] FIG. 1 is a diagram showing an example of an overall configuration of a mobile communication system according to an embodiment.
[FIG. 2A] FIG. 2A is a diagram showing a configuration example of a relay communication station configuring an example of a HAPS base station that constitutes the mobile communication system of the embodiment.
[FIG. 2B] FIG. 2B is a diagram showing a configuration example of a HAPS-GW, which corresponds to FIG. 2A.
[FIG. 3A] FIG. 3A is a diagram showing a configuration example of a relay communication station configuring another example of the HAPS base station that constitutes the mobile communication system of the embodiment.
[FIG. 3B] FIG. 3B is a diagram showing a configuration example of the HAPS-GW, which corresponds to FIG. 3A.
[FIG. 4A] FIG. 4A is a diagram showing an example of interference from a HAPS downlink to a terrestrial-base station terminal when the HAPS base station is applied to a system configuration of a reference example.
[FIG. 4B] FIG. 4B is a diagram showing an example of interference from a terrestrial-base station terminal to an uplink when the HAPS base station is applied to the current configuration.
[FIG. 5] FIG. 5 is a diagram showing an arrangement example of time slots of radio resources that are respectively set in a HAPS base station and a terrestrial base station to which the enhanced Inter-Cell Interference Coordination (eICIC) is applied, in the case that the HAPS base station is applied to the system configuration of the reference example.
[FIG. 6A] FIG. 6A is a diagram showing an uplink and downlink between the terrestrial base station and the terrestrial-base station terminal when a TDD (Time Division Duplex) method is used as a transmission method for a service link in the mobile communication system according to the embodiment.
[FIG. 6B] FIG. 6B is a diagram showing an example of a frequency band, in which the same frequency is shared in uplink and downlink between the terrestrial base station and the terrestrial-base station terminal in the TDD method.
[FIG. 6C] FIG. 6C is a diagram showing an arrangement example of time slots for uplink and downlink between the terrestrial base station and the terrestrial-base station terminal in the TDD method.
[FIG. 7] FIG. 7 is a diagram showing an arrangement example of time slots for uplink and downlink when a synchronization control is performed to synchronize a transmission timing and a reception timing among a plurality of terrestrial base stations in the system configuration using the conventional TDD method.
[FIG. 8A] FIG. 8A is a diagram showing an example of interference in downlink when a transmission timing and a reception timing are synchronized among a plurality of terrestrial base stations by the synchronization control in the system configuration using the conventional TDD method.
[FIG. 8B] FIG. 8B is a diagram showing an example of interference in the uplink when the transmission timing and the reception timing are synchronized among plural terrestrial base stations by a synchronization control in the system configuration using the conventional TDD method.
[FIG. 9] FIG. 9 is a diagram showing an arrangement example of time slots for uplink and downlink links when a synchronization control is performed to reverse a transmission timing and a reception timing between the terrestrial base station and the HAPS base station using the TDD method in the mobile communication system according to the embodiment.
[FIG. 10A] FIG. 10A is a diagram showing an example of interference from the terrestrial base station to the uplink of the HAPS base station when a synchronization control is performed to reverse a transmission timing and a reception timing between the terrestrial base station and the HAPS base station.
[FIG. 10B] FIG. 10B is a diagram showing an example of interference from the HAPS base station to the uplink of the terrestrial base station when a synchronization control is performed to reverse a transmission timing and a reception timing between the terrestrial base station and the HAPS base station.
[FIG. 10C] FIG. 10C is a diagram showing the interferences of FIGS. 10A and 10B summarizing together.
[FIG. 11A] FIG. 11A is a diagram showing a reduction in interference from the HAPS base station in the terrestrial base station according to the embodiment.
[FIG. 11B] FIG. 11B is a diagram showing a reduction in interference from the terrestrial base station in the HAPS base station according to the embodiment.
[FIG. 12] FIG. 12 is a diagram showing a configuration example of a mobile communication system in which an interference suppression section (interference canceller) is provided in the terrestrial base station according to the embodiment.
[FIG. 13] FIG. 13 is a diagram showing a configuration example of the interference suppression section (interference canceller) of the terrestrial base station in FIG. 12.
[FIG. 14] FIG. 14 is a diagram showing a configuration example of a mobile communication system in which an interference suppression section (interference canceller) is provided in the HAPS base station according to the embodiment.
[FIG. 15] FIG. 15 is a diagram showing a configuration example of the interference suppression section (interference canceller) of the HAPS base station in FIG. 14.
[FIG. 16] FIG. 16 is a diagram showing a configuration example of a mobile communication system in which an interference suppression section (interference canceller) is provided in a centralized base station according to the embodiment.
[FIG. 17] FIG. 17 is a diagram showing an example of control of the transmission timing and the reception timing between the terrestrial base station and the HAPS base station according to the embodiment.
[FIG. 18] FIG. 18 is a diagram showing an example of control of the transmission timing and the reception timing between the terrestrial base station and the HAPS base station according to the embodiment.

### DESCRIPTION OF EMBODIMENTS

Hereinafter, various embodiments are described with reference to the drawings. It is noted that, each drawing merely shows the shape, size and locational relationship in a schematic manner to enable the contents of the present invention to be understood, and therefore the present invention is not limited to only the shape, size and locational relationship exemplified in each drawing. Furthermore, the numerical values exemplified below are merely preferred examples of the present invention, and therefore the present invention is not limited to the exemplified numerical values.

In the present embodiment, although an example of a mobile communication system, in which the same frequency is shared between a HAPS base station (HAPS cellular system) as a upper-airspace-relaying type base station and a terrestrial base station (terrestrial cellular system), is mainly described, the present invention can also be applied to a mobile communication system in which the relay communication station of the upper-airspace-relaying type base station is disposed in a flying body or floating body other than the HAPS. Herein, the upper-airspace-relaying type base station may be an upper-airspace communication base station used in an NTN (Non-Terrestrial Network). The NTN may be, for example, a network using an artificial satellite such as a communication satellite described below and a HAPS or drone as a stratospheric communications platform that can provide communication services over a wide area by carrying a communication device and the like on an unmanned aircraft flown in the stratosphere.

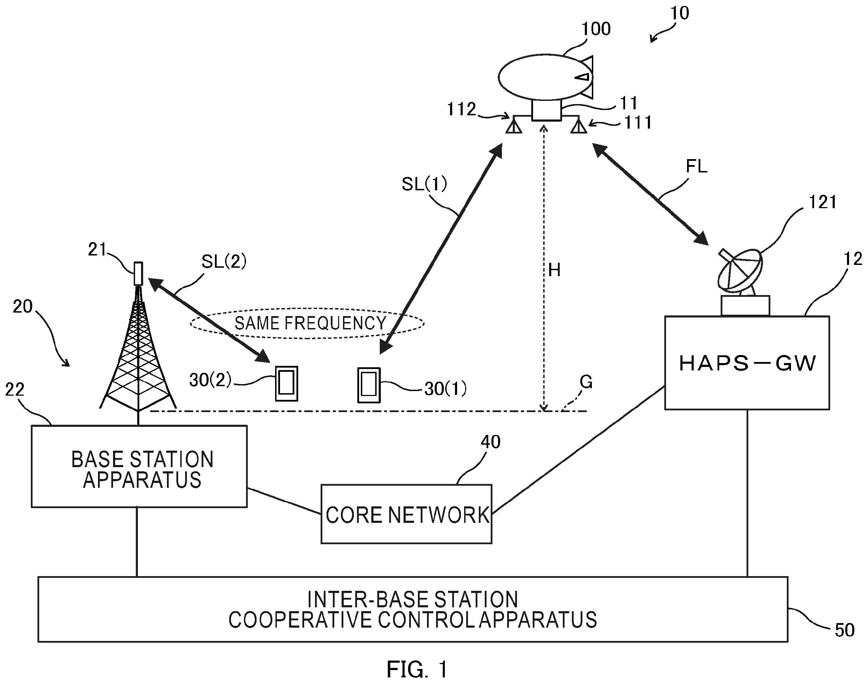

FIG. 1 is a diagram showing an example of a configuration of a mobile communication system (mobile phone system) according to an embodiment of the present invention. In FIG. 1, the mobile communication system of the present embodiment is provided with a HAPS base station (HAPS cellular system) 10 as a first base station (upper-airspace-relaying type base station) and a terrestrial base station (terrestrial cellular system) 20 as a second base station, as a plurality of base stations capable of performing radio communications with terminals 30.

The HAPS base station 10 performs a radio communication with a terminal (hereinafter also referred to as a "HAPS-base station terminal") 30(1) via a service link antenna (also referred to as a "HAPS-base station antenna") 112 of a relay communication station 11 provided on a HAPS ("High Altitude Pseudo Satellite" or "High Altitude Platform Station") 100, which serves as a flying body or a floating body located in the upper airspace. The HAPS 100 is provided with, for example, at least one of a battery and a solar-power generation system, and is capable of flying by the electric power. The HAPS 100 may be the airship-type HAPS as shown in the figure, or a solar plane-type HAPS. Further, the flying body or the floating body, in which the relay communication station 11 is provided, may be, not only the HAPS, but also an artificial satellite (for example, a communication satellite), a balloon, a drone, or an aircraft. The artificial satellite may be, for example, a LEO (Low Earth Orbit) satellite located in an orbit at an altitude of up to 2,000 [km] above the Earth's surface, a MEO (Medium Earth Orbit) satellite located in orbits at altitudes of higher than 2,000 [km] and lower than 36,000 [km], or a HEO (High Earth Orbit) satellite located in orbits at altitudes of near or higher than 36,000 [km]. Furthermore, the artificial satellite may be a GEO (Geostationary Earth Orbit) satellite, a quasi-geostationary satellite, a quasi-zenith satellite, or a non-geostationary satellite. Moreover, the flying body or the floating body, in the relay communication station 11 is provided, may be unmanned or manned. For example, the flying body or the floating body may be an unmanned or manned HAPS, an unmanned or manned satellite, an unmanned or manned balloon, an unmanned or manned drone, an unmanned aircraft, or a manned aircraft. Further, the flying body or the floating body may be an unmanned aerial vehicle (UAV) such as an unmanned drone, a UAS (Unmanned Aircraft Systems), etc. Furthermore, the flying body or the floating body may be a moored type body that is moored to another apparatus (mooring apparatus) using a mooring line such as a rope, cable, string or wire which has a predetermined strength. The purpose of mooring with the mooring line may include a purpose of power supply and signal transmission. Another apparatus, to which the moored type flying body or floating body is moored, may be an apparatus fixedly placed on the ground, an apparatus mounted on a vehicle capable of moving on the ground, an apparatus mounted on a ship, float, etc. capable moving on water such as sea or lake, or an apparatus mounted on another flying body or floating body. The mooring line may include a power supply line, a communication line such as an optical fiber, etc., or both the power feed line and the communication line. For example, the moored type flying body or floating body may be one or plural wired power-supply drones that are moored by one or plural mooring lines (power lines). In addition, the flying body or the floating body such as the HAPS 100, satellite, drone, balloon, aircraft, UAV, etc. may fly by being provided with at least one of a battery and an engine as a power source. The UAV may be, for example, an unmanned aircraft that flies on fuel, or a drone that flies on battery, etc.

The HAPS 100, in which the relay communication station 11 is mounted, may be, for example, controlled to be located by floating or flying in an airspace (floating airspace) where the altitude H from the ground G (or sea level) is equal to or less than 100 [km], by an autonomous control or an external control. The airspace in which the HAPS 100 is located may be, for example, the stratospheric airspace where the altitude H is equal to or greater than 18 [km] and equal to or less than 50 [km]. This airspace may be an airspace with relatively stable weather conditions at an altitude of 15 [km] or more and 25 [km] or less, and in particular an airspace at an altitude of approximately 20 [km]. Further, the airspace may be an airspace at an altitude of 0.1 [km] or more and 18 [km] or less for UAVs. The airspace may be an airspace at an altitude of 0.05 [km] or more for drones.

The relay communication station 11 is provided with an antenna section for feeder link (hereinafter also referred to as an "FL antenna") 111 and an antenna section for service link (HAPS-base station antenna) 112. The relay communication station 11 can perform a communication of feeder link FL with a gateway apparatus for HAPS (hereinafter referred to as "HAPS-GW") 12 that is disposed on land (or at sea), via the FL antenna 111. The FL antenna 111 is, for example, an array antenna capable of controlling a pointing direction as described below, and may be a Massive antenna in which a large number of antenna elements are disposed two-dimensionally and the directivity in the horizontal and vertical directions can be controlled.

The relay communication station 11 can perform a communication of service link SL(1) with the HAPS-base station terminal 30(1) via the HAPS-base station antenna 112. The HAPS-base station antenna 112 is, for example, an array antenna, in which a pointing direction can be controlled, and may be a Massive antenna in which a large number of antenna elements are disposed two-dimensionally and the directivity in the horizontal and vertical directions can be controlled.

The HAPS-GW 12 is connected to the core network 40 of the mobile communication network via a wired or wireless communication line, and is provided with an antenna section for feeder link (hereinafter also referred to as an "FL antenna") 121 that is a parabolic antenna, a Massive antenna capable of controlling the directivity in the horizontal and vertical directions, etc. The HAPS-GW 12 can perform a communication of feeder link FL with the relay communication station 11 mounted on the HASP, via the FL antenna 121.

The terrestrial base station 20 is provided with an antenna section (hereinafter also referred to as a "terrestrial-base station antenna") 21 and a base station apparatus 22 connected to the core network 40 of the mobile communication network via a wired communication line or a wireless communication line such as an optical fiber, etc. The base station apparatus 22 can perform a communication of service link SL(2) with a terminal (hereinafter also referred to as a "terrestrial-base station terminal") 30(2) via the terrestrial-base station antenna 21. The terrestrial-base station antenna 21 is, for example, an array antenna in which a pointing direction can be controlled, and may be a Massive antenna in which a large number of antenna elements are disposed two-dimensionally and the directivity in the horizontal and vertical directions can be controlled.

Each of the HAPS-GW 12 of the HAPS base station 10 and the base station apparatus 22 of the terrestrial base station 20 is connected to an inter-base station cooperative control apparatus (also called an "inter-base station network cooperative control apparatus" or "inter-system cooperative control apparatus") 50 via a wired communication line or a wireless communication line such as an optical fiber, etc. in a network-cooperative control system. The HAPS base station 10 and the terrestrial base station 20 are time-synchronized with each other via the inter-base station cooperative control apparatus 50, and a timing control is performed so that the HAPS base station 10 and the terrestrial base station 20 have opposite transmission and reception timings.

Each of the HAPS base station 10 and the terrestrial base station 20 is configured, for example, using hardware such as a computer apparatus having a CPU, a memory, etc., an external-communication interface section for the core network 40 and the inter-base station cooperative control apparatus 50, a radio communication section, and the like, and is capable of performing a radio communication between the HAPS-base station terminal 30(1) and the terrestrial-base station terminal 30(2) and performing a communication with the core network 40 and the inter-base station cooperative control apparatus 50 by executing a predetermined program.

In the mobile communication system of the present embodiment, the same radio transmission method is used for communication of the service link SL(1) of the HAPS base station 10 and communication of the service link SL(2) of the terrestrial base station 20, and the same frequency is shared to improve a frequency efficiency of the service links. As for the radio transmission method, a TDD (Time Division Duplex) method is to be used, which uses the same frequency for both transmission and reception by time division, and, for example, a TDD method such as a communication method for the LTE (Long Term Evolution) or the LTE-Advanced, a communication method for the 4th generation mobile phones, and the communication method for the 5th generation mobile phones or subsequent next-generation mobile phone communication method.

The HAPS-base station terminal 30(1) that can connect to and communicate with the HAPS base station 10 and the terrestrial-base station terminal 30(2) that can connect to and communicate with the terrestrial base station 20 are mobile communication terminals 30 with the same specifications. The terminal 30 is a mobile phone, a smartphone, a portable personal computer with a function of mobile communication, or the like, and is also called a mobile terminal, a user equipment (UE), a mobile station, a mobile device, or a portable communication terminal. The terminal 30 may be a modular mobile station incorporated into a vehicle such as an automobile, or a mobile object such as a drone, or may be a terminal apparatus for an IoT (Internet of Things) device.

The terminal 30 is configured, for example, using hardware such as a computer apparatus having a CPU, a memory, etc., a radio communication section, and the like, and is capable of performing a radio communication with each of the HAPS base station 10 and the terrestrial base station 20, etc. by executing a predetermined program.

The HAPS base station 10 of the present embodiment is configured with the relay communication station 11 mounted on the HAPS 100 in the upper airspace, or is configured with the relay communication station 11 and the HAPS-GW 12 disposed on land (or at sea).

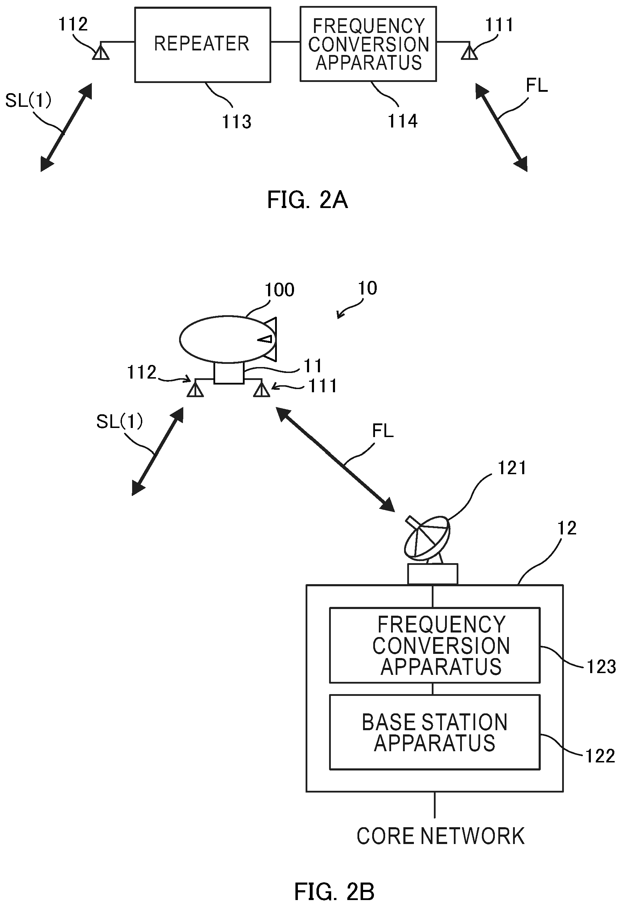

FIG. 2A is a diagram showing a configuration example of the relay communication station 11 configuring an example of the HAPS base station 10 in the mobile communication system of the embodiment. In the present configuration example, the relay communication station 11 is a radio relay apparatus (hereinafter referred to as a "frequency conversion repeater") for converting the frequency of a feeder link that is a frequency different from that of a service link. In the downlink, the relay communication station 11 converts the frequency of the feeder link transmitted from the HAPS-GW 12 into the frequency of the service link, and performs a transmission to the HAPS-base station terminal 30(1). On the other hand, in the uplink, the relay communication station 11 converts the frequency of the service link transmitted from the HAPS-base station terminal 30(1) into the frequency of the feeder link, and performs a transmission to the HAPS-GW 12.

The relay communication station 11 of the HAPS base station 10 in the present example is configured with a repeater relay apparatus (frequency conversion repeater) having a repeater 113 and a frequency conversion apparatus 114. The repeater 113 includes a low-noise amplifier that amplifies the reception signal of the service link SL(1) received via the HAPS-base station antenna 112, a power amplifier that amplifies the transmission signal of the service link SL(1) transmitted via the HAPS-base station antenna (SL antenna) 12, and the like. The frequency conversion apparatus 114 performs a conversion between the frequency of the service link SL(1) and the frequency of the feeder link FL.

FIG. 2B is a diagram showing a configuration example of the HAPS-GW 12, which corresponds to FIG. 2A. The HAPS-GW 12 in the present example includes a base station apparatus (hereinafter also referred to as "HAPS base station apparatus") 122 and a frequency conversion apparatus 123. The base station apparatus 122 includes a base-band processing apparatus that processes base band signals of the service link, a communication interface section for communicating with the core network 40 via a backhaul line, and the like. The frequency conversion apparatus 123 performs a frequency conversion between the frequency of the service link signal input to/output from the base station apparatus 122 and the frequency of the feeder link signal transmitted/received via the FL antenna 121. The HAPS-GW 12 includes a function of communicating with the inter-base station cooperative control apparatus 50 in order to adjust the transmission and reception timings of the service link SL with the terrestrial base station 20 and to transfer the location information of the HAPS 100.

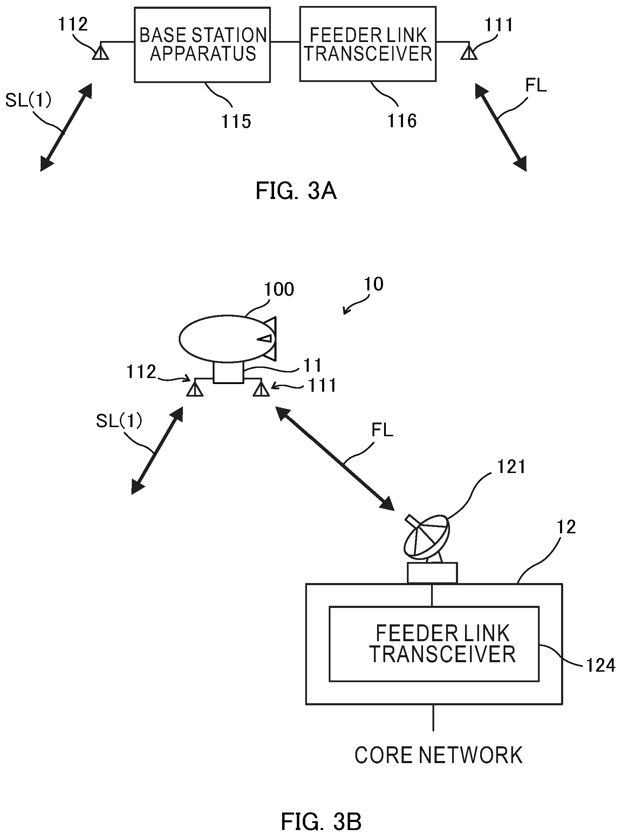

FIG. 3A is a diagram showing a configuration example of a relay communication station 11 configuring another example of the HAPS base station 10 in the mobile communication system of the embodiment. In the present configuration example, the relay communication station 11 of the HAPS base station 10 is configured with a base station apparatus similar to that of a normal terrestrial base station, and a feeder link transceiver in which the feeder link between the relay communication station 11 of the HAPS base station 10 and the HAPS-GW uses a frequency different from that of the service link. In the feeder link, unlike the service link, the optimum radio transmission method can be selected as appropriate.

The relay communication station 11 of the HAPS base station 10 in the present example includes a base station apparatus 115 equivalent to the base station apparatus (hereinafter also referred to as "terrestrial-base station apparatus") 22 of the terrestrial base station 20, and a feeder link transceiver 116. The base station apparatus 115 includes a low-noise amplifier that amplifies a reception signal of the service link SL(1) received via the HAPS-base station antenna 112, a power amplifier that amplifies a transmission signal of the service link SL(1) to be transmitted via the HAPS-base station antenna 112, a base-band processing apparatus that processes baseband signals of the service link, and the like. The feeder link transceiver 116 transmits and receives signals on the backhaul line transmitted and received via the FL antenna 111 to and from the HAPS-GW 12.

FIG. 3B is a diagram showing a configuration example of the HAPS-GW 12, which corresponds to FIG. 3A. The HAPS-GW 12 in the present example includes a feeder link transceiver 124. The feeder link transceiver 124 transmits and receives signals on the backhaul line, which are transmitted and received via the FL antenna 121 to and from the relay communication station 11 in the upper airspace mounted on the HAPS 100. Moreover, the feeder link transceiver 124 communicates with the core network 40 via the backhaul link. Furthermore, the HAPS-GW 12 includes a function of communicating with the inter-base station cooperative control apparatus 50 in order to adjust the transmission and reception timings of the service link SL with the terrestrial base station 20 and to transfer the location information of the HAPS 100.

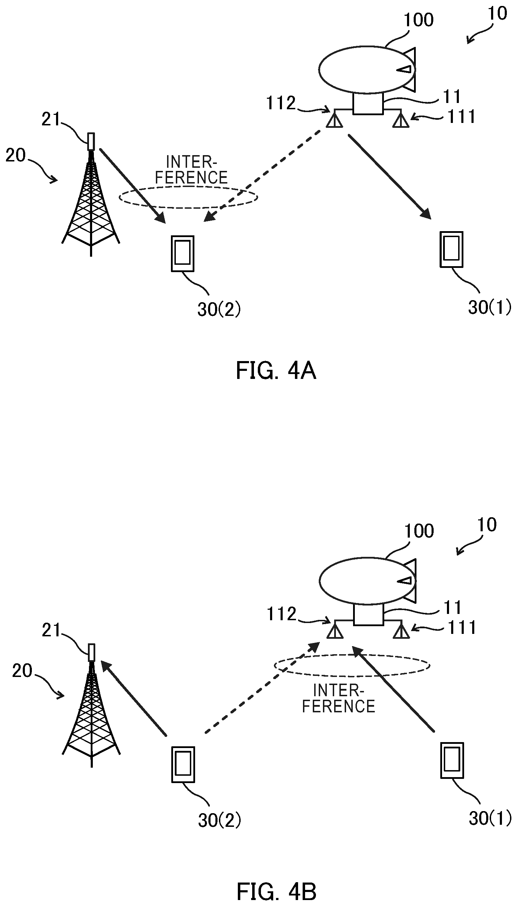

In a configuration providing the HAPS base station 10 and the terrestrial base station 20 as shown in FIG. 1, if the HAPS base station 10 and the terrestrial base station 20 transmit radio waves at the same time in the FDD method or the TDD method, or if the HAPS-base station terminal 30(1) and the terrestrial-base station terminal 30(2) transmit signals at the same time, an interference may occur between the HAPS cellular system in the upper airspace and the terrestrial cellular system. For example, as shown in FIG. 4A, when a signal of HAPS downlink is transmitted from the relay communication station 11 mounted on the HAPS 100 in the upper airspace to the HAPS-base station terminal 30(1), the transmission signal of the HAPS downlink may reach the terrestrial-base station terminal 30(2) that is receiving a signal of the terrestrial downlink from the terrestrial base station 20, and an interference from the HAPS downlink to the terrestrial-base station terminal 30(2) may occur. Furthermore, as shown in FIG. 4B, when a signal of the terrestrial uplink is transmitted from the terrestrial-base station terminal 30(2) to the terrestrial base station 20, the transmission signal of the terrestrial uplink may reach the relay communication station 11 of the HAPS 100 in the upper airspace that is receiving a signal of the HAPS uplink from the HAPS-base station terminal 30(1), and an interference from the terrestrial-base station terminal 30(2) to the HAPS uplink of the relay communication station 11 mounted on the HAPS 100 may occur.

There is conventionally known an enhanced Inter-Cell Interference Coordination called eICIC, which complies with the above-mentioned LTE-Advanced standard, as a technology for controlling an interference between a plurality of base stations.

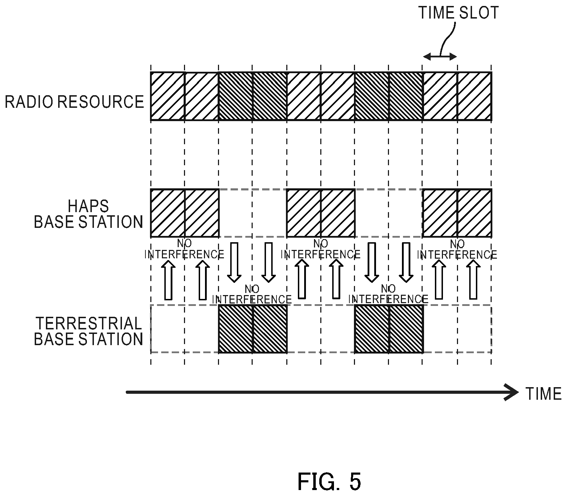

FIG. 5 is a diagram showing an arrangement example of time slots of radio resources that are respectively set in the HAPS base station 10 and the terrestrial base station 20, in the case of applying the enhanced Inter-Cell Interference Coordination (eICIC) when the HAPS base station is applied to the system configuration of the reference example. As shown in FIG. 5, in the conventional enhanced Inter-Cell Interference Coordination (eICIC), the radio resources of the same frequency are time-divided, and the time slots different from each other are allocated to the HAPS base station 10 and the terrestrial base station 20, respectively. In this way, since the radio resources are orthogonal on time axis, it is possible to mutually avoid interference at the same frequency between the HAPS base station 10 and the terrestrial base station 20. However, in the conventional enhanced Inter-Cell Interference Coordination (eICIC), each of the HAPS base station 10 and the terrestrial base station 20 uses the radio resources (time slots) in a time-divided manner. As a result, not all of the frequencies (all times) allocated to the mobile communication system of the embodiment are available for use, and the communication capacity (maximum transmission rate, peak throughput) of the service link decreases for each of the HAPS base station 10 and the terrestrial base station 20. In particular, the communication capacity of the terrestrial-base station terminals connected to the terrestrial base station 20, which has a large number of terminals within its cell, decreases.

In the present embodiment, in order to avoid an interference between the HAPS base station 10 and the terrestrial base station 20 and to prevent a decrease in the communication capacity (maximum transmission rate, peak throughput) of the service link of each of the HAPS base station 10 and the terrestrial base station 20, the TDD (Time Division Duplex) method, which is adopted in standards such as the fifth generation of mobile communications, is used as the transmission and reception method for the service link of each of the base stations 10, 20.

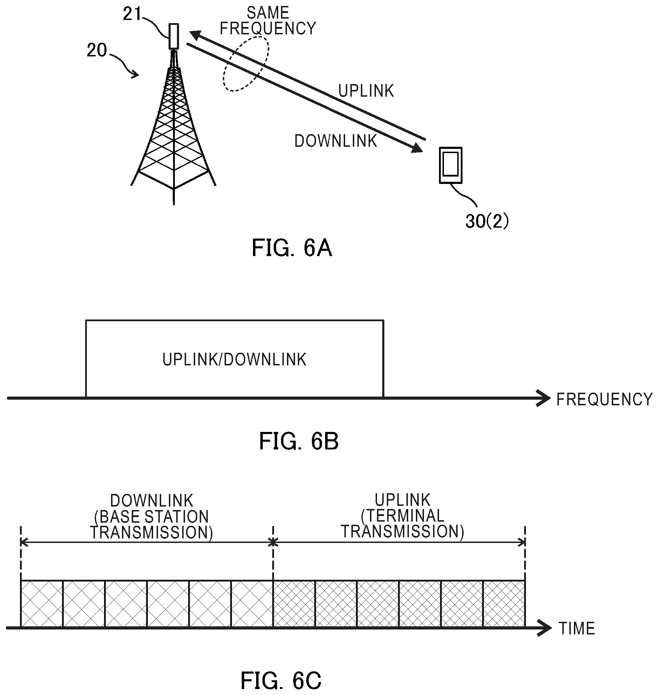

In the TDD (Time Division Duplex) method, the same frequency is used for the uplink and downlink, and the time slots are used in a time-division manner for the uplink and the downlink. For example, in the terrestrial base station 20, the same frequency is used for the uplink and the downlink between the terrestrial base station 20 and the terrestrial-base station terminal 30(2) as shown in FIGS. 6A and 6B. Then, as shown in FIG. 6C, the radio resources (time slots) on time axis are used in a time-division multiplexed manner between the downlink transmission (base station transmission) from the terrestrial base station 20 to the terrestrial-base station terminal 30(2) and the uplink transmission (terminal transmission) from the terrestrial-base station terminal 30(2) to the terrestrial base station 20.

In the case of using the TDD (Time Division Duplex) method in the HAPS base station 10 and the terrestrial base station 20 of the present embodiment, by applying the interference reduction technology described below, which avoids an interference between the HAPS base station 10 and the terrestrial base station 20, the HAPS base station 10 and the terrestrial base station 20 can completely share the same frequency. Furthermore, the HAPS base station 10 and the terrestrial base station 20 can use all frequencies (all times) allocated to the mobile communication system, so that a decrease in the communication capacity of the service link of each of the base stations 10, 20 can be prevented. In particular, it is possible to prevent a decrease in the communication capacity of the terrestrial-base station terminals connected to the terrestrial base station 20 having a large number of terminals in its cell.

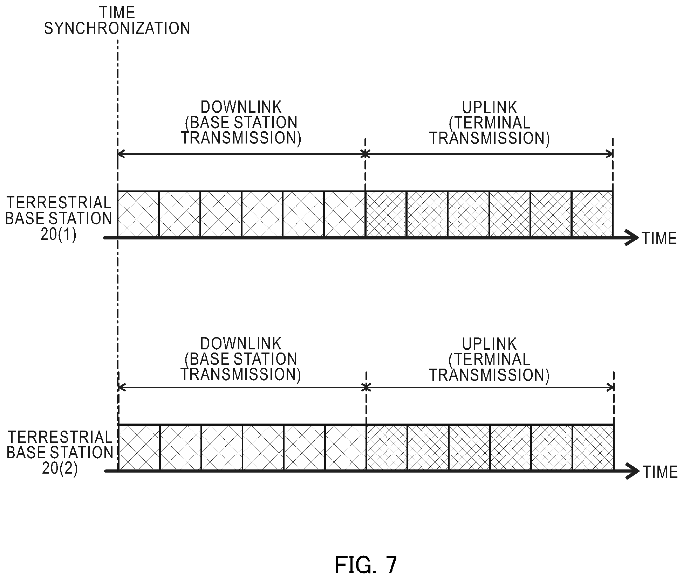

In the system using the conventional TDD method, in which the same frequency is shared by plural base stations, in order to avoid an interference between the uplink and the downlink of each of the base stations, for example, as shown in FIG. 7, a synchronization control is performed between plural base stations 20(1) and 20(2) so that the transmission timings of the base station transmissions on the downlink for transmission from the base station to the terminal are synchronized with each other, and so that the transmission timings of the terminal transmissions on the uplink for transmission from the terminal to the base station are synchronized with each other.

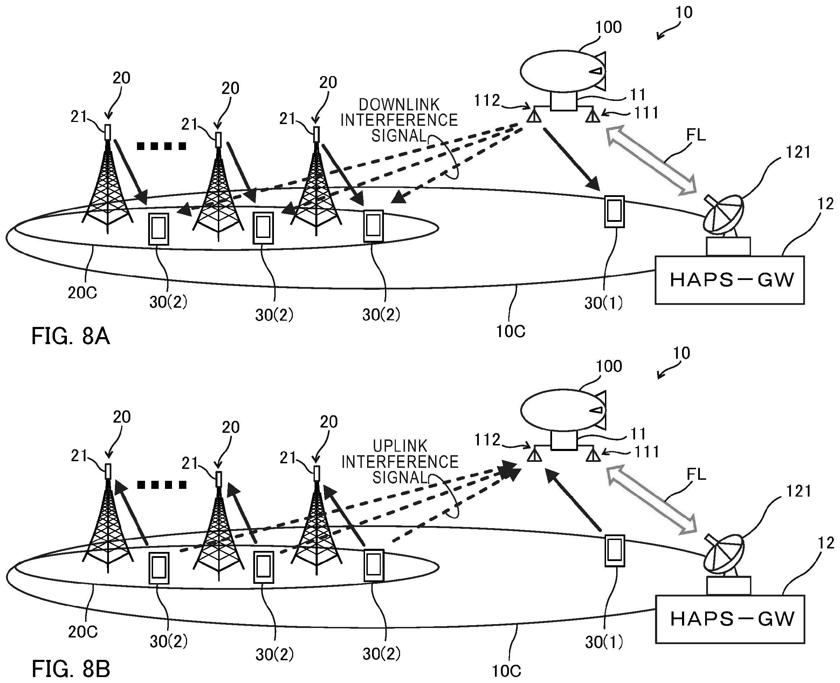

When the communication method of the terrestrial cellular system using the terrestrial base station 20 (hereinafter referred to as the "terrestrial cellular method") and the communication method of the HAPS cellular system using the HAPS base station 10 (hereinafter referred to as the "HAPS cellular method") are used simultaneously, as shown in FIG. 8A, particularly in the downlink of the service link, interference waves from the HAPS base station 10 that transmits signals over a wide area may degrade the communication quality of a large number of terrestrial-base station terminals 30(2) located in the terrestrial cell 20C, and as shown in FIG. 8B, in the uplink, signals transmitted by a large number of terrestrial-base station terminals 30(2) may degrade the communication quality of the HAPS-base station terminal 30(1) located in the HAPS cell 10C. Therefore, in order to simultaneously use the terrestrial cellular system and the HAPS cellular system, it is necessary to reduce the interference.

In the mobile communication system of the present embodiment, the transmission timing and the reception timing between the HAPS base station 10 and the terrestrial base station 20 are reversed to each other.

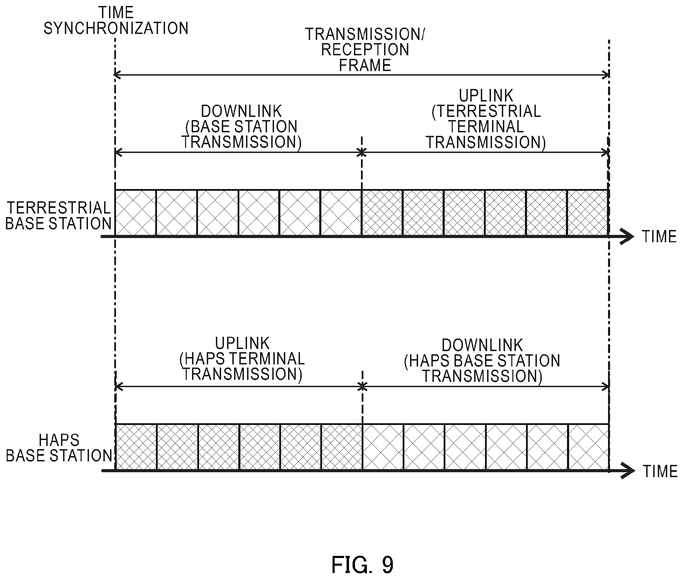

FIG. 9 is a diagram showing an arrangement example of time slots for uplink and downlink links when a synchronization control is executed to reverse the transmission timing and the reception timing between the terrestrial base station 20 and the HAPS base station 10 using the TDD method in the mobile communication system according to the embodiment. In each of the plural consecutive transmission/reception frames (radio frames) shown in FIG. 9, the transmission timing and the transmission period of the downlink from the terrestrial base station 20 to the terrestrial-base station terminal 30(2) are synchronized with the transmission timing and the transmission period of the uplink from the HAPS-base station terminal 30(1) to the HAPS base station 10. On the other hand, the transmission timing and the transmission period of the uplink from the terrestrial-base station terminal 30(2) to the terrestrial base station 20 are synchronized with the transmission timing and the transmission period of the downlink from the HAPS base station 10 to the HAPS-base station terminal 30(1).

Herein, the terrestrial base station 20 and the HAPS base station 10 may use time information obtained by a GNSS (Global Navigation Satellite System) receiver to adjust their transmission timings to be reversed to each other.

By reversing the transmission timing and the reception timing of the HAPS base station 10 and the terrestrial base station 20 to each other on the uplink and the downlink as shown in FIG. 9, the situation receiving the interference is changed significantly compared to when the transmission timing and the reception timing of the HAPS base station 10 and the terrestrial base station 20 are the same on the uplink and the downlink as shown in FIG. 8.

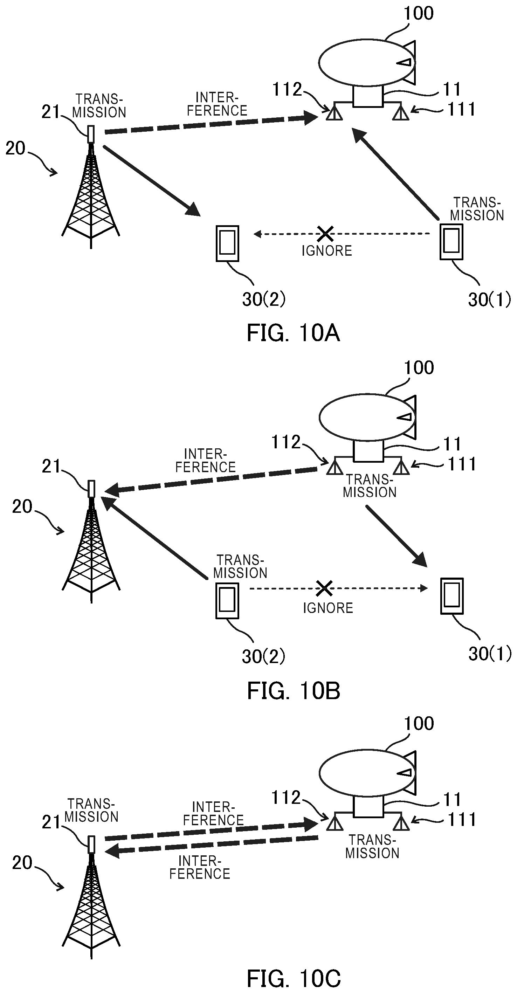

As shown in FIG. 10A, the downlink of the terrestrial base station 20 becomes the uplink of the service link of the HAPS base station 10. Therefore, the radio waves of downstream transmission transmitted from the terrestrial-base station antenna 21 reach the HAPS-base station antenna 112 as shown in the figure, and the downlink of the terrestrial base station 20 interferes with the uplink of the service link of the HAPS base station 10.

It is noted that, since the terrestrial-base station terminal 30(2) and the HAPS-base station terminal 30(1) are located at a relatively large distance and are both located on land, there are many obstructions, such as buildings, between the terminals. Therefore, the interference signal power received when the uplink-transmission signal of the HAPS-base station terminal 30(1) reaches the terrestrial-base station terminal 30(2) is generally negligibly small.

On the other hand, as shown in FIG. 10B, the uplink of the terrestrial base station 20 becomes the downlink of the service link of the HAPS base station 10. Therefore, the radio waves of downstream transmission of the service link transmitted from the HAPS-base station antenna 112 reach the terrestrial-base station antenna 21 as shown in the figure, causing an interference with the uplink of the terrestrial base station 20.

It is noted that, since the HAPS-base station terminal 30(1) and the terrestrial-base station terminal 30(2) are located at a relatively large distance, and are both located on land, there are many obstructions, such as buildings, between the terminals. Therefore, the interference signal power received when the transmission signal of the uplink of the terrestrial-base station terminal 30(2) reaches the HAPS-base station terminal 30(1) is generally negligibly small.

Summarizing FIGS. 10A and 10B, when the terrestrial cellular system and the HAPS cellular system share the same frequency as shown in FIG. 10C, the interference can be put together into an interference between the terrestrial-base station antenna 21 and the service link antenna 112 of the HAPS base station. That is, if the interference between the terrestrial-base station antenna 21 and the service link antenna 112 of the HAPS base station is reduced, the terrestrial cellular system and the HAPS cellular system can share the same frequency.

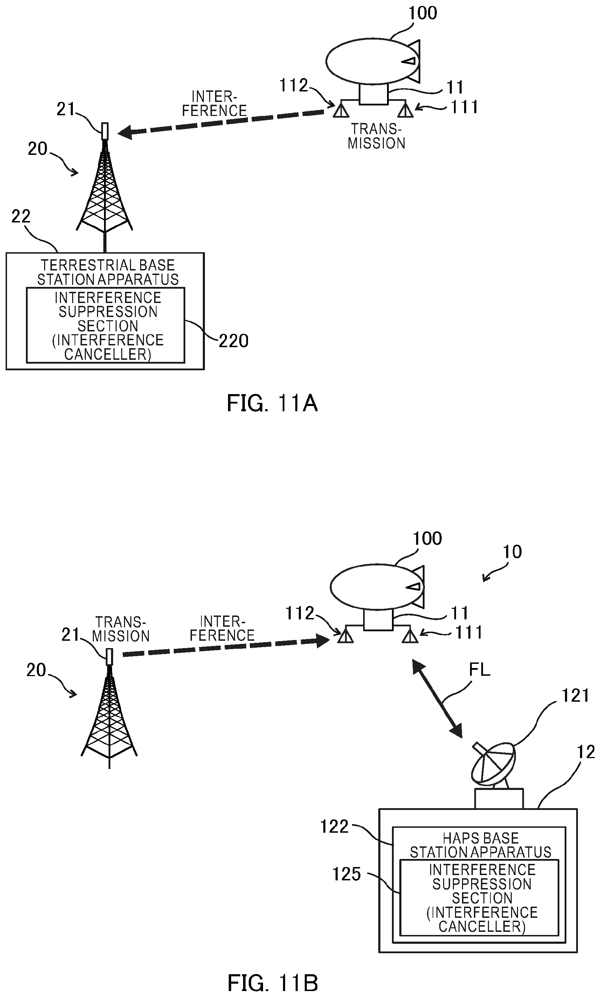

In the present embodiment, in order to reduce the interference between the terrestrial-base station antenna 21 and the service link antenna 112 of the HAPS base station, each of the terrestrial-base station apparatus 22 in the terrestrial base station 20 and the HAPS base station apparatus 122 in the HAPS base station 10 is provided with an interference suppression section (also called an "interference canceller") that suppresses the above-mentioned interference. For example, as shown in FIG. 11A, an interference suppression section (interference canceller) 220 mounted on the terrestrial-base station apparatus 22 suppresses (hereinafter also referred to as "cancels") the interference from the relay communication station 11 of the HAPS base station. Furthermore, as shown in FIG. 11B, an interference suppression section (interference canceller) 125 mounted on the HAPS base station apparatus 122 of the HAPS-GW 12 suppresses (cancels) the interference from the terrestrial base station 20.

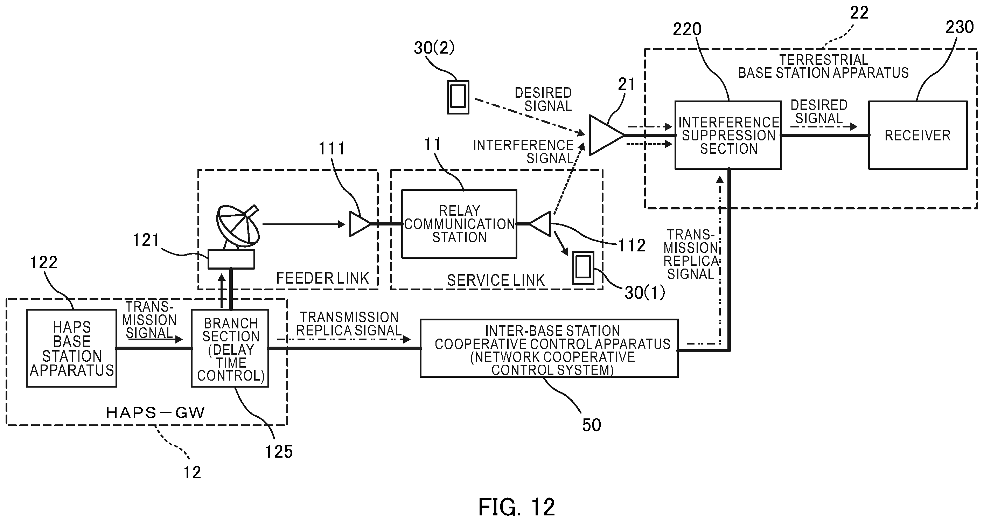

FIG. 12 is a diagram showing a configuration example of a mobile communication system in which the interference suppression section (interference canceller) 220 is provided in the terrestrial base station 20 according to the embodiment. It is noted that in FIG. 12, the common configurations as those in FIGS. 1 to 3 described above are denoted by the same reference numerals, and their explanations are omitted.

The interference suppression section (interference canceller) 220 in the present configuration example is provided in the base station apparatus 22 of the terrestrial base station 20, and suppresses (cancels) the interference signals transmitted from the relay communication station 11 of the HAPS base station and reached the terrestrial-base station antenna 21.

In FIG. 12, a transmission signal s_{H}(t), which is output from the base station apparatus (HAPS base station apparatus) 122 provided in the HAPS-GW 12 of the HAPS base station, is branched into two transmission signals by a branch section 125.

Among the two transmission signals branched by the branch section 125, one transmission signal s_{H}(t) is transmitted to the HAPS-base station terminal 30(1) via the FL antenna 121 and the relay communication station 11 as a downlink signal of the service link from the HAPS base station. A part of the downlink signal, which is transmitted from the HAPS-base station antenna 112 of the relay communication station 11, reaches the terrestrial-base station antenna 21 of the terrestrial base station 20 as an interference signal to the terrestrial terminal signal transmitted from the terrestrial-base station terminal 30(2). Furthermore, the uplink signal (terrestrial terminal signal) of the service link, which is transmitted from the terrestrial-base station terminal 30(2), reaches the terrestrial-base station antenna 21 of the terrestrial base station as a desired signal. The interference signal from the relay communication station 11 and the desired signal from the terrestrial-base station terminal 30(2) are received by the terrestrial-base station antenna 21 and input to the interference suppression section 220 as uplink reception signals of the service link.

The other transmission signal s_{H}(t) branched by the branch section 125 is transferred, as a replica of the transmission signal (hereinafter also referred to as the "transmission replica signal") of the service link to be transmitted from the HAPS base station, to the interference suppression section (interference canceller) 220 provided in the base station apparatus 22 of the terrestrial base station via a wired network (for example, optical fiber) and the inter-base station cooperative control apparatus 50.

The branch section 125 also performs a delay time control to delay the transmission replica signal s_{H}(t), which is transferred to the inter-base station cooperative control apparatus 50, by a predetermined delay time, so that the two transmission signals (interference signal, transmission replica signal), which are branched from the same transmission signal, reach the interference suppression section 220 at the same timing with each other.

The interference suppression section 220 of the terrestrial-base station apparatus 22 performs a correlation between the reception signal received by the terrestrial-base station antenna 21, which includes the desired signal (terrestrial terminal signal) and the interference signal h_{H}s_{H}(t) (transmission signal from the HAPS base station), and the transmission replica signal s_{H}(t), and estimates the complex reception amplitude (hereinafter also referred to as the "propagation path response") h_{H} of the interference signal (transmission signal from the HAPS base station).

Furthermore, the interference suppression section 220 generates an interference suppression signal (-h_{H}s_{H}(t)) by superimposing the complex reception amplitude h_{H} on the transmission replica signal s_{H}(t) from the HAPS base station. The interference suppression section 220 suppresses (cancels) the interference signal h_{H}s_{H}(t) by combining the reception signal (desired signal + interference signal h_{H}s_{H}(t)) with the interference suppression signal (-h_{H}s_{H}(t)), and inputs only the desired signal (terrestrial terminal signal) to a receiver 230 of the terrestrial-base station apparatus 22.

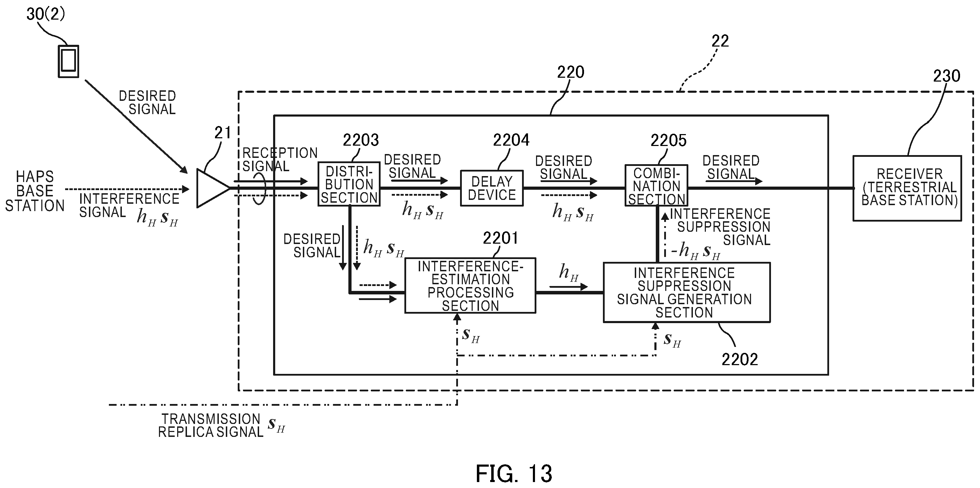

FIG. 13 is a diagram showing an example of the configuration of the interference suppression section (interference canceller) 220 of the terrestrial base station 20 of FIG. 12. It is noted that in FIG. 13, the common configurations as those in FIGS. 1 to 3 and 12 described above are denoted by the same reference numerals, and their explanations are omitted.

In FIG. 13, the interference suppression section (interference canceller) 220 is provided with an interference-estimation processing section 2201, an interference-suppression signal generation section 2202, a distribution section 2203, a delay device 2204 and a combination section 2205.

The interference-estimation processing section 2201 calculates a cross-correlation coefficient using the reception signal (desired signal + interference signal) received by the terrestrial-base station antenna 21 and the transmission replica signal s_{H}(t) transferred via the inter-base station cooperative control apparatus 50, and estimates the complex reception amplitude (propagation path response) h_{H} of the interference signal h_{H}s_{H}(t).

The interference-suppression signal generation section 2202 multiplies the complex reception amplitude (propagation path response) h_{H} of the interference signal h_{H}s_{H}(t), which is estimated by the interference-estimation processing section 2201, by the transmission replica signal s_{H}(t) to generate the interference suppression signal (-h_{H}s_{H}(t)).

The distribution section 2203 distributes and supplies the reception signal (desired signal + interference signal) received by the terrestrial-base station antenna 21 to each of the interference-estimation processing section 2201 and the delay device 2204.

The delay device 2204 delays the reception signal by a predetermined delay time so that the reception signal (desired signal + interference signal h_{H}s_{H}(t)) distributed by the distribution section 2203 and the interference suppression signal (-h_{H}s_{H}(t)) generated from the reception signal are input to the combination section 2205 at the same timing with each other.

The combination section 2205 suppresses (cancels) the interference signal h_{H}s_{H}(t) by combining the interference suppression signal (-h_{H}s_{H}(t)) generated by the interference-suppression signal generation section 2202 with the reception signal (desired signal + interference signal h_{H}s_{H}(t)), and demodulates the desired signal.

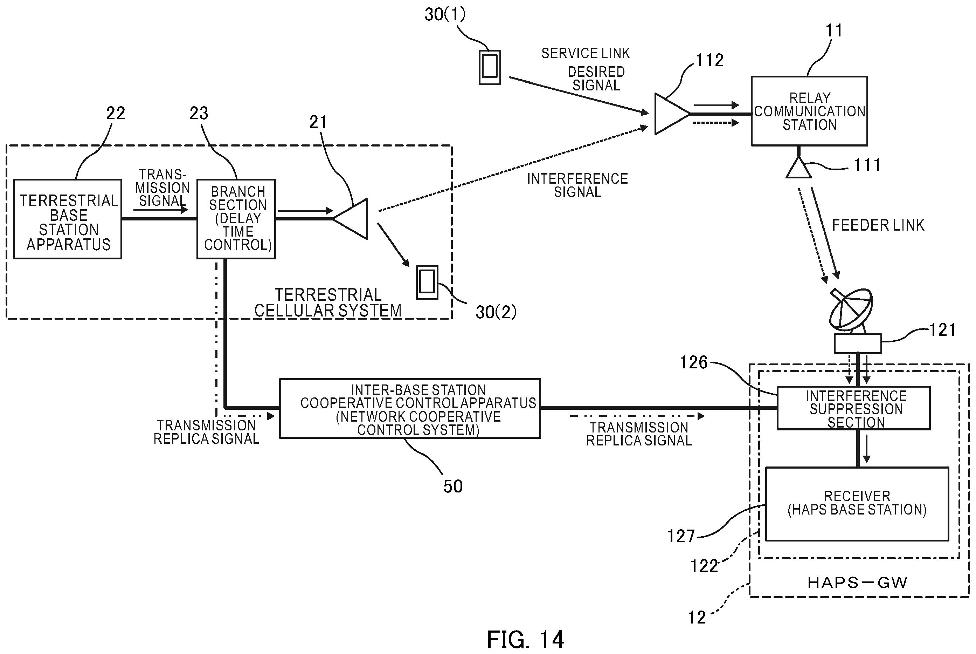

FIG. 14 is a diagram showing a configuration example of a mobile communication system in which an interference suppression section (interference canceller) 126 is provided in the HAPS base station 10 according to the embodiment. It is noted that in FIG. 14, the common configurations as those in FIGS. 1 to 3 described above are denoted by the same reference numerals, and their explanations are omitted.

The interference suppression section (interference canceller) 126 in the present configuration example is provided in the HAPS base station apparatus 122 of the HAPS-GW 12, and suppresses (cancels) the interference signal that is transmitted from the terrestrial-base station antenna 21 and reached the service link antenna 112 of the relay communication station 11 of the HAPS base station.

In FIG. 14, a transmission signal s_{M}(t), which is output from the terrestrial-base station apparatus 22, is branched into two transmission signals by the branch section 23.

Among the two transmission signals branched by the branch section 23, one transmission signal s_{M}(t) is transmitted to the terrestrial-base station terminal 30(2) via the terrestrial-base station antenna 21 as a downlink signal of the service link from the terrestrial base station 20. A part of the downlink signal, which is transmitted from the terrestrial-base station antenna 21, reaches the HAPS-base station antenna 112 of the relay communication station 11 of the HAPS base station as an interference signal to the HAPS terminal signal transmitted from the HAPS-base station terminal 30(1). Furthermore, the uplink signal (HAPS terminal signal) of the service link, which is transmitted from the HAPS-base station terminal 30(1), reaches the HAPS-base station antenna 112 of the relay communication station 11 as a desired signal. The interference signal from the terrestrial base station 20 and the desired signal from the HAPS-base station terminal 30(1) are received by the HAPS-base station antenna 112 of the relay communication station 11 and input to the interference suppression section 126 as uplink reception signals of the service link via the FL antenna 111 of the relay communication station 11 and the FL antenna 121 of the HAPS-GW 12.

The other transmission signal s_{M}(t) branched by the branch section 23 is transferred, as a replica (transmission replica signal) of the transmission signal of the service link to be transmitted from the terrestrial-base station apparatus 22 to the interference suppression section (interference canceller) 126 provided in the HAPS base station apparatus 122 of the HAPS-GW 12 via a wired network (for example, optical fiber) and the inter-base station cooperative control apparatus 50.

The branch section 23 also performs a delay time control to delay the transmission replica signal s_{M}(t), which is transferred to the inter-base station cooperative control apparatus 50, by a predetermined delay time, so that the two transmission signals (interference signal, transmission replica signal), which are branched from the same transmission signal, reach the interference suppression section 126 at the same timing with each other.

The interference suppression section (interference canceller) 126 of the HAPS base station apparatus 122 performs a correlation between the reception signal received by the HAPS-base station antenna 112, which includes the desired signal (terrestrial terminal signal) and the interference signal h_{M}s_{M}(t) (transmission signal from the terrestrial base station), and the transmission replica signal s_{M}(t), and estimates the complex reception amplitude (hereinafter also referred to as the "propagation path response") h_{M} of the interference signal (transmission signal from the HAPS base station).

Furthermore, the interference suppression section (interference canceller) 126 generates the interference suppression signal (-h_{M}s_{M}(t)) by superimposing the complex reception amplitude h_{M} on the transmission replica signal s_{M}(t) from the terrestrial base station. The interference suppression section 126 suppresses (cancels) the interference signal h_{M}s_{M}(t) by combining the reception signal (desired signal + interference signal h_{M}s_{M}(t)) with the interference suppression signal (-h_{M}s_{M}(t)), and inputs only the desired signal (terrestrial terminal signal) to the receiver 127 of the HAPS base station apparatus 122.

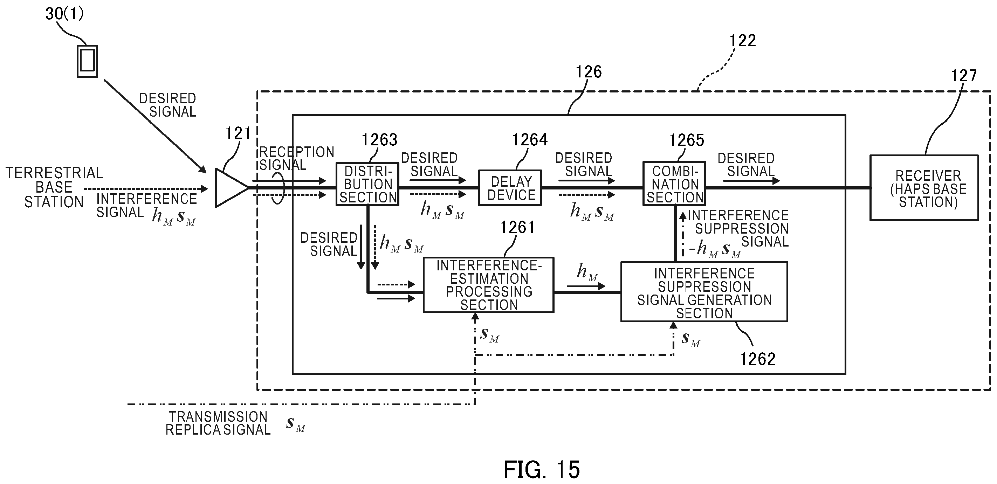

FIG. 15 is a diagram showing a configuration example of the interference suppression section (interference canceller) 126 of the HAPS base station 10 in FIG. 14. It is noted that in FIG. 15, the common configurations as those in FIGS. 1 to 3 and 14 described above are denoted by the same reference numerals, and their explanations are omitted.

In FIG. 15, the interference suppression section (interference canceller) 126 is provided with an interference-estimation processing section 1261, an interference-suppression signal generation section 1262, a distribution section 1263, a delay device 1264 and a combination section 1265.

The interference-estimation processing section 1261 calculates a cross-correlation coefficient using the reception signal (desired signal + interference signal) received by the FL antenna 111 of the relay communication station 11 and the FL antenna 121 of the HAPS-GW 12 and the transmission replica signal s_{M}(t) transferred via the inter-base station cooperative control apparatus 50, and estimates the complex reception amplitude (propagation path response) h_{M} of the interference signal h_{M}s_{M}(t).

The interference-suppression signal generation section 1262 multiplies the complex reception amplitude (propagation path response) h_{M} of the interference signal h_{M}s_{M}(t), which is estimated by the interference-estimation processing section 1261, by the transmission replica signal s_{M}(t) to generate an interference suppression signal (-h_{M}s_{M}(t)).

The distribution section 1263 distributes and supplies the reception signal (desired signal + interference signal) received by the FL antenna 121 of the HAPS-GW 12 to each of the interference-estimation processing section 1261 and the delay device 1264.

The delay device 1264 delays the reception signal by a predetermined delay time so that the reception signal (desired signal + interference signal h_{M}s_{M}(t)) distributed by the distribution section 1263 and the interference suppression signal (-h_{M}s_{M}(t)) generated from the reception signal are input to the combination section 1265 at the same timing with each other.

The combination section 1265 combines the interference suppression signal (-h_{M}s_{M}(t)) generated by the interference-suppression signal generation section 1262 with the reception signal (desired signal + interference signal h_{M}s_{M}(t)) to suppress (cancel) the interference signal h_{M}s_{M}(t), and demodulate the desired signal.

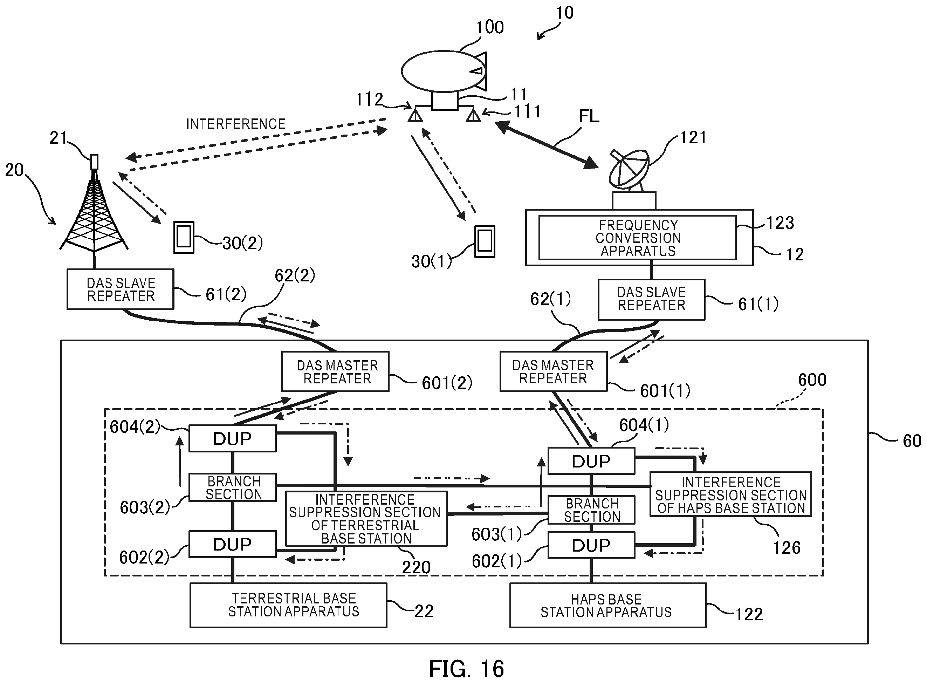

FIG. 16 is a diagram showing a configuration example of a mobile communication system in which interference suppression sections (interference cancellers) 220 and 126 are provided in a centralized-base station (hereinafter also referred to as a "centralized-base station configuration section") 60 according to the embodiment. FIG. 16 shows a configuration example providing a centralized-base station configuration section 60 in which the terrestrial-base station apparatus 22, the HAPS base station apparatus 122 and the centralized-interference suppression section (centralized interference canceller) 600 are disposed in the same location or configured in the same apparatus. In FIG. 16, the solid arrow lines indicate downlink transmission signals transmitted from each base station apparatus, the dashed arrow lines indicate interference signals, the arrow lines of one-dot chain line indicate uplink reception signals received by each base station apparatus, and the arrow lines of two-dot chain line indicate transmission replica signals. It is noted that in FIG. 16, the common configurations as those in FIGS. 1 to 3 and 12 to 15 described above are denoted by the same reference numerals, and their explanations are omitted.

In FIG. 16, the centralized-base station configuration section 60 and each of the HAPS-GW 12 of the HAPS base station 10 and the terrestrial-base station antenna 21 of the terrestrial base station 20 are connected by a DAS (distributed antenna system) configured using optical cables or the like. For example, the communication path between the centralized-base station configuration section 60 and the HAPS-GW 12 of the HAPS base station 10 is configured with a DAS slave repeater 61(1), an optical fiber 62(1), and a DAS master repeater 601(1) in the centralized-base station configuration section 60. In addition, the communication path between the centralized-base station configuration section 60 and the terrestrial-base station antenna 21 of the terrestrial base station 20 is configured with a DAS slave repeater 61(2), an optical fiber 62(2), and a DAS master repeater 601(2) in the centralized-base station configuration section 60.

In the centralized-base station configuration section 60, a downlink transmission signal, which is output from the HAPS base station apparatus 122, passes through a DUP (duplexer) (also called an "antenna duplexer") 602(1), branch section 603(1) and DUP 604(1), is transmitted via the DAS master repeater 601(1), optical fiber 62(1) and DAS slave repeater 61(1), and reaches the HAPS-GW 12. The downlink transmission signal branched by the branch section 603(1) is input to the interference suppression section 220 of the terrestrial base station in the centralized-base station configuration section 60, as a transmission replica signal of the HAPS base station.

The uplink reception signal (including the interference signal from the terrestrial base station), which is output from the HAPS-GW 12, is transmitted via the DAS slave repeater 61(1), optical fiber 62(1) and DAS master repeater 601(1), and is input to the interference suppression section 126 of the HAPS base station via the DUP 604(1). The interference suppression section 126 outputs the uplink reception signal in which the interference signal from the terrestrial base station is suppressed. The uplink reception signal after suppressing the interference signal, which is output from the interference suppression section 126, reaches the receiver of the HAPS base station apparatus 122 via the DUP 602(1).

Furthermore, in the centralized-base station configuration section 60, the downlink transmission signal, which is output from the terrestrial-base station apparatus 22, passes through the DUP 602(2), branch section 603(2) and DUP 604(2), is transmitted via the DAS master repeater 601(2), optical fiber 62(2) and DAS slave repeater 61(2), and reaches the terrestrial-base station antenna 21 of the terrestrial base station 20. The downlink transmission signal, which is branched by the branch section 603(2), is input to the interference suppression section 126 of the HAPS base station in the centralized-base station configuration section 60, as a transmission replica signal of the terrestrial base station.

The uplink reception signal (including the interference signal from the HAPS base station), which is output from the terrestrial-base station antenna 21 of the terrestrial base station 20, is transmitted via the DAS slave repeater 61(2), optical fiber 62(2) and DAS master repeater 601(2), and is input to the interference suppression section 220 of the terrestrial base station via the DUP 604(2). The interference suppression section 220 outputs an uplink reception signal in which the interference signal from the HAPS base station is suppressed. The uplink reception signal after suppressing the interference signal, which is output from the interference suppression section 220, reaches the receiver of the terrestrial-base station apparatus 22 via the DUP 602(2).

In the system provided with the centralized-base station configuration section 60 of FIG. 16, a large-scale inter-network cooperative control system spanning plural base stations different from each other is not required, and the interference suppression section (interference canceller) of the HAPS base station and the interference suppression section (interference canceller) of the terrestrial base station can be easily configured. Furthermore, a large-scale inter-network cooperative control system for matching the transmission timing and the reception timing of the terrestrial base station 20 and the HAPS base station 10 is not required, and the synchronization between the base stations can be easily established in the centralized-base station configuration section 60.

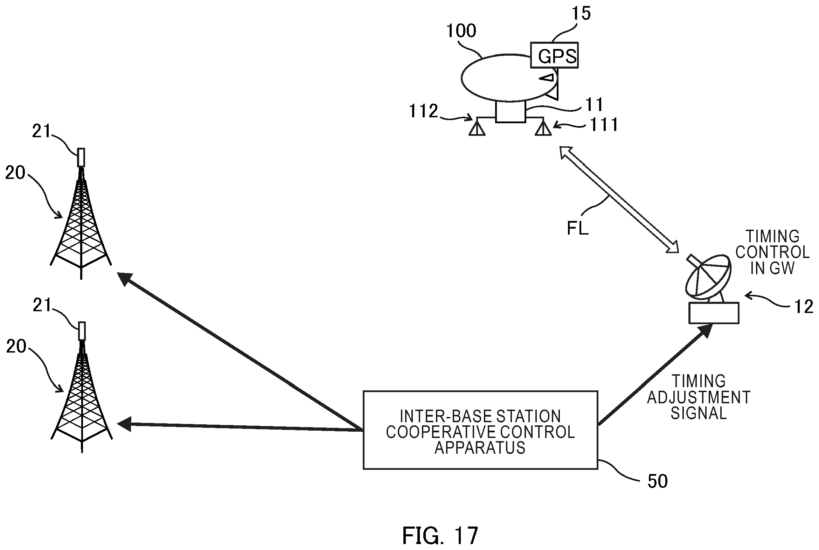

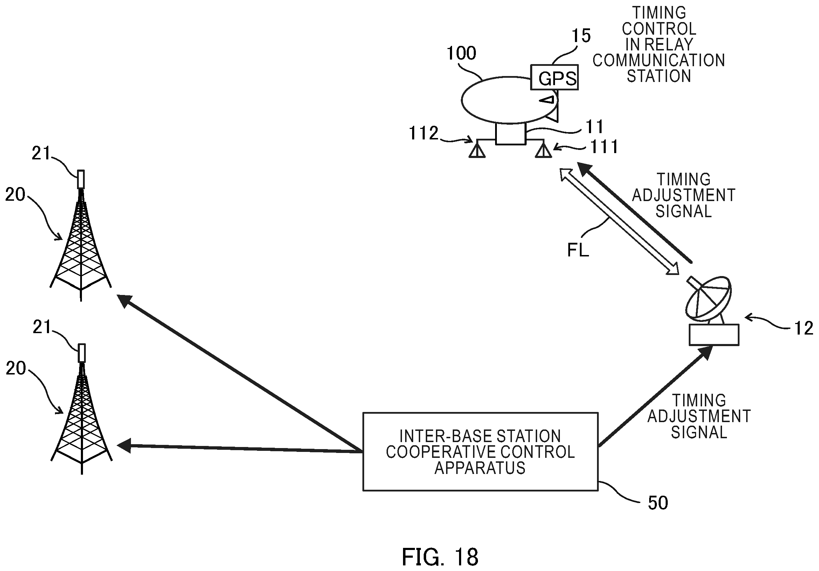

Each of FIGS. 17 and 18 is a diagram showing an example of control of the transmission timing and the reception timing between the terrestrial base station 20 and the HAPS base station 10 according to the embodiment. In the mobile communication system of the present embodiment, since the transmission timing and the reception timing of the terrestrial base station 20 and the HAPS base station 10 are necessary to be reversed to each other, the inter-system (inter-base station) cooperative control apparatus 50 adjusts the transmission timing and the reception timing of the terrestrial base station 20 and the HAPS base station 10 so that the transmission frame time and the reception frame time of the terrestrial base station 20 and the HAPS base station 10 are reversed to each other. In the example of FIG. 17, the transmission timing and the reception timing are adjusted by the HAPS-GW 12. In the example of FIG. 18, the transmission timing and the reception timing are adjusted by the relay communication station 11 mounted on the HAPS 100.

As described above, according to the present embodiment, which uses the TDD method as the transmission and reception method, it is possible to share the same frequency for each service link between the terminal and each of the service link antenna (HAPS-base station antenna) of the HAPS base station (first base station) and the service link antenna (terrestrial-base station antenna) of the terrestrial base station (second base station), thereby overcoming the problem of a reduction in the communication capacity of the terminal while enabling the sharing of the same frequency as in the enhanced Inter-Cell Interference Coordination (eICIC) shown in FIG. 5.

Furthermore, according to the present embodiment, the frequency utilization rate can be doubled by sharing the frequencies of the terrestrial base station with the HAPS service link.

Moreover, according to the present embodiment, this can be achieved by using a normal TDD method (5G, etc.) and changing the transmission timing and the reception timing of the terrestrial base station 20 and the HAPS base station 10 (without any special changes).

Furthermore, according to the present embodiment, the terrestrial-base station interference canceller (interference suppression section 220 of terrestrial-base station apparatus 22) and the HAPS-base station interference canceller (interference suppression section 126 of HAPS base station apparatus 122), which are respectively provided in the terrestrial base station 20 and the HAPS base station 10, reduce the interference in the uplink and the downlink of the service link of each base station, making it possible to realize the frequency sharing between the terrestrial base station and the HAPS base station.

Further, according to the present embodiment, since both the terrestrial base station 20 and the HAPS base station 10 avoid the interference, and therefore any array antenna control using a Massive antenna or the like is not required.

Furthermore, according to the present embodiment, it is possible to realize the frequency sharing in the case that the terrestrial-base station antenna 21 and the HAPS-base station antenna 112 are not provided with, for example, a Massive antenna and it is not possible to perform a null forming.

Moreover, according to the present embodiment, both the terrestrial base station 20 and the HAPS base station 10 are capable suppressing the interference by applying the terrestrial-base station interference canceller (interference suppression section 220 of the terrestrial-base station apparatus 22) and the HAPS-base station interference canceller (interference suppression section 126 of the HAPS base station apparatus 122) that use the network-cooperative control system (inter-base station cooperative control apparatus 50). In addition, the terrestrial-base station interference canceller and the HAPS-base station interference canceller have the same configuration.

In particular, according to the present embodiment, in the centralized-base station configuration section 60 in which one or plural terrestrial-base station apparatuses 22, the HAPS base station apparatus 122 and the centralized-interference suppression section (centralized interference canceller) 600 are disposed in the same location or configured in the same apparatus, a large-scale inter-network cooperative control system (inter-base station cooperative control apparatus) that spans different base stations is not required, and the HAPS-base station interference canceller and the terrestrial-base station interference canceller can be easily configured.

Further, according to the present embodiment, the terrestrial base station 20 and the HAPS base station 10 do not need any special apparatus or control to share the frequency.

Furthermore, according to the present embodiment, the transmission timing adjustment between the terrestrial base station 20 and the HAPS base station 10 can be easily achieved by the inter-system (base station) cooperative control apparatus 50.

Moreover, since the present invention can improve the frequency utilization efficiency at the HAPS base station and the terrestrial base station, prevent the decrease in the communication capacity of terminals, and provide the system capable of realizing the frequency sharing between the HAPS base station and the terrestrial base station without adding any special apparatus to the HAPS base station and the terrestrial base stations, it is possible to contribute to achieving Goal 9 of the Sustainable Development Goals (SDGs), which is to "Create a foundation for industry and technological innovation".

The present invention can also be applied to the cases where the frequency is shared between various kinds of systems exemplified below in (A) to (D) and the terrestrial base station.
(A) Frequency sharing between HAPS base stations and terrestrial base stations.
(B) Frequency sharing between helicopter-mounted radio relay systems or UAV-mounted radio relay systems and terrestrial base stations during disasters during disasters.
(C) Frequency sharing between drone-mounted radio relay systems and terrestrial base stations.
(D) Frequency sharing between geostationary, medium or low earth orbit satellite communication systems and terrestrial base stations.

It is noted that, the process steps and configuration elements of the mobile communication system, the upper-airspace-relaying type base station, the HAPS cellular system, the terrestrial base station, the terrestrial cellular system, the relay communication station, the HAPS-GW, the terminal (user apparatus, mobile station, communication terminal), and the inter-base station cooperative control apparatus described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, radio relay apparatuses, Node B, servers, gate ways, exchanges, computers, hard disk drive apparatuses, or optical disk drive apparatuses) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like for using to establish the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may be executed by a computer or processor.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: HAPS base station (upper-airspace-relaying type base station)
10C: HAPS cell
11: relay communication station
12: HAPS-GW
15: GPS receiver
20: terrestrial base station
20C: terrestrial cell
21: terrestrial-base station antenna (service link antenna)
22: base station apparatus
23: branch section
30: terminal
30(1): HAPS-base station terminal
30(2): terrestrial-base station terminal
40: core network
50: inter-base station cooperative control apparatus
60: centralized-base station configuration section
600: centralized-interference suppression section (centralized interference canceller)
100: HAPS
111: FL antenna
112: HAPS-base station antenna (service link antenna)
113: repeater
114: frequency conversion apparatus
115: base station apparatus
116: feeder link transceiver
121: FL antenna
122: base station apparatus
123: frequency conversion apparatus
124: feeder link transceiver
125: branch section
126: interference canceller (HAPS base station)
1261: interference-estimation processing section
1262: interference-suppression signal generation section
1263: distribution section
1264: delay device
1265: combination section
127: receiver
220: interference canceller (terrestrial base station)
2201: interference-estimation processing section
2202: interference-suppression signal generation section
2203: distribution section
2204: delay device
2205: combination section
230: receiver

## Claims

1. A mobile communication system comprising a upper-airspace-relaying type base station that performs a radio communication with a terminal via a service link antenna of a relay communication station provided in a flying body or floating body located in an upper airspace, and one or plural terrestrial base stations that performs a radio communication with a terminal via a service link antenna disposed on land or at sea, wherein the upper-airspace-relaying type base station and the terrestrial base station are time-synchronized with each other,
wherein each of the upper-airspace-relaying type base station and the terrestrial base station performs a radio communication of a service link with a terminal by a TDD (Time Division Duplex) method using a same frequency,
wherein a transmission timing and a reception timing of the radio communication of the TDD method in the service link are reversed to each other between the upper-airspace-relaying type base station and the terrestrial base station,
wherein the terrestrial base station:
branches a transmission signal of downlink transmitted from the terrestrial base station and transfers the transmission signal to the upper-airspace-relaying type base station as a transmission replica signal;
performs a correlation processing between an uplink reception signal of the terrestrial base station, which includes an interference signal from the upper-airspace-relaying type base station that interferes with an uplink of the terrestrial base station, and a transmission replica signal transferred from the upper-airspace-relaying type base station, and estimates a complex reception amplitude of the interference signal from the upper-airspace-relaying type base station;
generates an interference suppression signal for suppressing the interference signal from the upper-airspace-relaying type base station, by using an estimation result of the complex reception amplitude of the interference signal from the upper-airspace-relaying type base station and the transmission replica signal; and
suppresses the interference signal from the upper-airspace-relaying type base station, which is included in the uplink reception signal of the terrestrial base station, by combining the uplink reception signal of the terrestrial base station with the interference suppression signal, and
wherein the base station of upper-airspace relying type:
branches a transmission signal of downlink transmitted from the upper-airspace-relaying type base station and transfers the transmission signal to the terrestrial base station as a transmission replica signal;
performs a correlation processing between an uplink reception signal of the upper-airspace-relaying type base station, which includes the interference signal from the terrestrial base station that interferes with an uplink of the upper-airspace-relaying type base station, and the transmission replica signal transferred from the terrestrial base station, and estimates a complex reception amplitude of the interference signal from the terrestrial base station;
generates an interference suppression signal for suppressing the interference signal from the terrestrial base station, by using the estimation result of the complex reception amplitude of the interference signal from the terrestrial base station and the transmission replica signal; and
suppresses the interference signal from the terrestrial base station, which is included in the uplink reception signal of the upper-airspace-relaying type base station, by combining the uplink reception signal of the upper-airspace-relaying type base station with the interference suppression signal.

2. The mobile communication system according to claim 1,
wherein the relay communication station mounted on the flying body or the floating body is configured with a repeater relay apparatus that relays transmission and reception signals without regenerating them.

3. The mobile communication system according to claim 1,
wherein the relay communication station mounted on the flying body or the floating body is configured with a base station apparatus that regenerates transmission and reception signals, remodulates the regenerated signals, and relays the remodulated signals.

4. The mobile communication system according to any one of claims 1 to 3, further comprising an inter-base station cooperative control apparatus that performs a control between the upper-airspace-relaying type base station and the terrestrial base station, and
wherein the inter-base station cooperative control apparatus adjusts each of transmission timings so that the transmission and the reception are reversed to each other between respective base stations, by using time information of GNSS (Global Navigation Satellite System) that is received by the upper-airspace-relaying type base station and received via a gateway apparatus, and time information of GNSS (Global Navigation Satellite System) received by the terrestrial base station.

5. The mobile communication system according to any one of claims 1 to 3, further comprising an inter-base station cooperative control apparatus that performs a control between the upper-airspace-relaying type base station and the terrestrial base station, and
wherein the inter-base station cooperative control apparatus transfers the transmission replica signal from the terrestrial base station to the upper-airspace-relaying type base station, and transfers the transmission replica signal from the upper-airspace-relaying type base station to the terrestrial base station.

6. The mobile communication system according to any one of claims 1 to 3, comprising a centralized-base station configuration section in which the terrestrial base station and the upper-airspace-relaying type base station are disposed in a same location or respectively configured in a same apparatus, and
wherein the centralized-base station configuration section performs:
an estimation of the complex reception amplitude of the interference signal from the upper-airspace-relaying type base station, a generation of the interference suppression signal and a suppression of the interference signal from the upper-airspace-relaying type base station, in the terrestrial base station; and
an estimation of the complex reception amplitude of the interference signal from the terrestrial base station, a generation of the interference suppression signal and a suppression of the interference signal from the terrestrial base station, in the upper-airspace-relaying type base station.

7. The mobile communication system according to any one of claims 1 to 3,
wherein the flying body or the floating body is a communication satellite, a UAV (Unmanned Aerial Vehicle) that flies at an altitude of 18 km or less, or a HAPS that flies in the stratosphere at an altitude of 18 km or more.
